# EUROPÄISCHE PATENTSCHRIFT

(11) **EP 1 285 239 B1**
(45) Veröffentlichungstag und Bekanntmachung des Hinweises auf die Patenterteilung: **18.03.2009**
(21) Anmeldenummer: 01938202.7
(22) Anmeldetag: 08.05.2001
(51) Int. Cl.: G01F 23/284

(54) **FÜLLSTANDSMESSGERÄT**
LEVEL METER
APPAREIL DE MESURE DE NIVEAU DE REMPLISSAGE

(30) Priorität: 13.05.2000 DE 10023497
(43) Veröffentlichungstag der Anmeldung: 26.02.2003
(73) Patentinhaber: Endress + Hauser GmbH + Co. KG, 79689 Maulburg (DE)
(72) Erfinder: MÜLLER, Roland, 79585 Steinen (DE); MAIER, Winfried, 79689 Maulburg (DE); GETMAN, Igor, 79539 Lörrach (DE); LÜTKE, Wolfram, 83024 Rosenheim (DE)
(74) Vertreter: Andres, Angelika Maria
(86) Internationale Anmeldenummer: PCT/EP2001/005208
(87) Internationale Veröffentlichungsnummer: WO 2001/088488

(56) Entgegenhaltungen:
- EP-A- 0 762 089
- WO-A-98/36490
- DE-U- 9 312 251
- US-A- 5 926 080

## Beschreibung

Die Erfindung betrifft ein mit Mikrowellen arbeitendes Füllstandsmeßgerät.

Bei der Füllstandsmessung werden Mikrowellen mittels einer Antenne zur Oberfläche eines Füllguts gesendet und die an der Oberfläche reflektierten Echowellen empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgutoberfläche und der Antenne bestimmt.

In der industriellen Meßtechnik werden regelmäßig dielektrische Stabantennen und Hornantennen zum Senden und/oder Empfangen eingesetzt. Typischerweise wird ein Gehäuse verwendet, das einen Gehäuseabschnitt aufweist, der die Geometrie eines kurzgeschlossenen Hohlleiters besitzt.

In den Gehäuseabschnitt mit der Hohlleitergeometrie ist ein Erregerelement eingeführt, über das Mikrowellen durch den Gehäuseabschnitt hindurch gesendet und/oder empfangen werden. Die Mikrowellen werden beim Senden von einem entfernt angeordneten Mikrowellengenerator erzeugt und über Koaxialleitungen zu einem Sende- oder Sende- und Empfangselement transportiert. In der Antenne erfolgt über das Sende- oder Sende- und Empfangselement eine Umwandlung von zugeführten leitungsgebundenen Mikrowellen in Mikrowellen, die sich im freien Raum ausbreiten, und umgekehrt.

Bei einer Hornantenne schließt sich an das Gehäuse ein trichterförmiger in behälter-zugewandter Richtung sich aufweitender das Horn bildender Abschnitt an. Im Fall der Stabantenne ist ein in den Behälter weisender Stab aus einem Dielektrikum vorgesehen. Üblicherweise ist der Innenraum des Gehäuses von einem Einsatz aus einem Dielektrikum nahezu vollständig ausgefüllt. Im Fall der Hornantenne weist der Einsatz ein kegelförmiges in den Behälter weisendes Ende auf. Bei Stabantennen schließt sich an den Einsatz die stabförmige Antenne an.

Zur Bestimmung des Füllstandes können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgutoberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

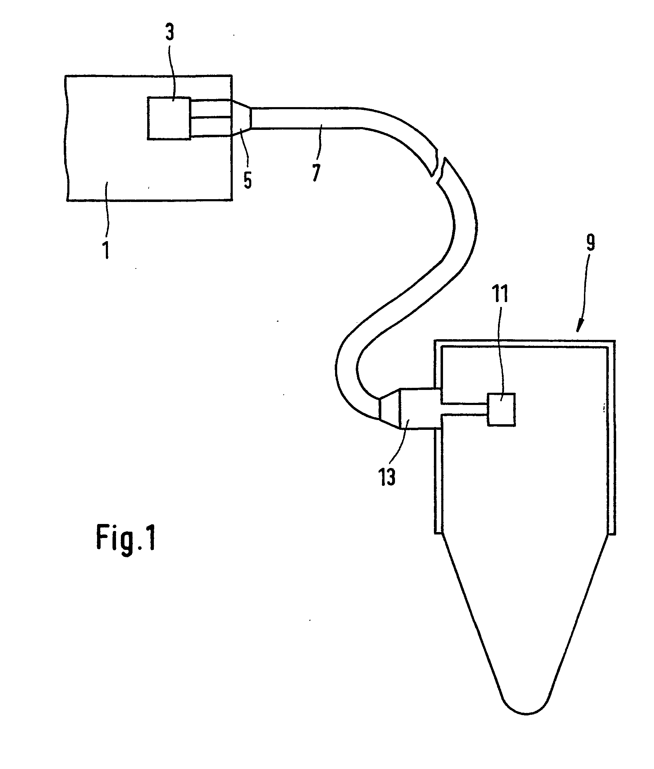

Fig. 1 zeigt schematisch den Aufbau eines herkömmlichen mit Mikrowellen arbeitenden Füllstandsmeßgeräts. Es weist eine elektronische Schaltung 1 auf, die einen Mikrowellengenerator 3 umfaßt. Der Mikrowellengenerator 3 ist über eine Anschlußbuchse 5 mit einer Koaxialleitung 7 verbunden, die im Betrieb Mikrowellen vom Mikrowellengenerator 3 zu einer Antenne 9 führt. In der Antenne 9 ist ein Erregerelement 11 angeordnet, das mit der Koaxialleitung 7 über eine weitere Anschlußbuchse 13 verbunden ist.

Bei den vorbeschriebenen mit Mikrowellen arbeitenden Füllstandsmeßgeräten besteht das Problem, daß nicht der gesamte an die Antenne angrenzende Bereich als Meßbereich zur Verfügung steht. Der Grund hierfür sind Störsignale, die sich Meßsignalen in diesem Bereich überlagern.

Ein wesentlicher Anteil der Störsignale entsteht durch auf dem Weg vom Mikrowellengenerator zur Antenne und in der Antenne auftretende Reflektionen sowie Mehrfachreflektionen entlang des Wegs.

Durch eine geeignete Geometrie der Antenne können im Antennenbereich entstehende Reflektionen gering gehalten werden. Bei der Einkopplung, d.h. am Übergang von der Koaxialleitung zur Antenne, von über eine Zuleitung zugeführten Mikrowellen besteht jedoch immer ein deutlicher Impedanzsprung der zu Reflektionen und Mehrfachreflektionen führt. Bei diesen Mehrfachreflektionen werden vom Mikrowellengenerator erzeugte Mikrowellen an der Einkopplung in das Füllstandsmeßgerät zurück reflektiert und im Gerät erneut in Richtung Einkopplung reflektiert. Über die Einkopplung gelangen diese Mikrowellen dann entweder in die Antenne oder sie werden ganz oder zumindest teilweise erneut reflektiert. Diese Reflexionen oder Mehrfachreflexionen führen insb. zu einer künstlichen Verlängerung von kurzen zu sendenden Mikrowellenimpulsen.

Einkopplungen können zwar innerhalb gewisser Grenzen dahingehend ausgelegt werden, daß möglichst wenig Reflektionen oder Mehrfachreflektionen auftreten. Diese Auslegung ist jedoch in der Regel nur für einen Frequenzbereich mit einer geringen Bandbreite wirksam. Bei Mikrowellensignalen mit einer relativ großen Frequenzbandbreite, wie sie bei der Füllstandsmessung verwendet werden, stößt man hier sehr schnell an Grenzen, so daß der Anteil von Ein- und Mehrfachreflektionen erheblich ist. Diese Störsignale überlagern sich mit dem eigentlichen Meßsignal. Eine Füllstandsmessung nach dem Pulsradar-Verfahren ist nur dann durchführbar, wenn die Laufzeit des Meßsignal größer ist als die Dauer des Sendepulses und die Zeit, in der die letztgenannten Störsignale abgeklungen sind. Für das FMCW-Verfahren gilt analog, daß die Frequenzverschiebung des Meßsignals größer sein muß als die Frequenzverschiebung der Störsignale.

Der dem Bereich, in dem die Störsignale noch nicht abgeklungen sind, zugeordnete Abstand vor der Einkopplung bzw. vor der Antenne, in dem eine Messung nicht möglich ist, wird üblicherweise als Blockdistanz bezeichnet.

In der US-A 5,610,611 ist ein Füllstandsmeßgerät beschrieben, bei dem elektromagnetische Signale in einer elektronischen Schaltung erzeugt und auf einen Wellenleiter übertragen werden. Der Wellenleiter führt die elektromagnetischen Signale in einen mit einem Füllgut, dessen Füllstand zu messen ist, gefüllten Behälter hinein und an einer Oberfläche des Füllgutes reflektierte Signale wieder heraus.

Um Reflektionen und/oder Mehrfachreflektionen, die von der Einspeisung verursacht werden und eine vergrößerte Blockdistanz zur Folge haben, zu vermeiden, ist es beschrieben, die elektronische Schaltung direkt mit dem Wellenleiter zu verbinden. Dies ist möglich, da das Füllstandsmeßgerät ausschließlich, insb. auch im Behälter, leitungsgebundene elektromagnetische Signale verwendet.

Bei einem Füllstandsmeßgerät, bei dem Mikrowellen mittels einer Antenne in den freien Raum ausgesendet werden, ist dagegen immer eine gesonderte Verbindung zwischen dem Mikrowellengenerator und dem Sende- oder Sende- und Empfangselement vorgesehen. Typischerweise ist dies eine Koaxialleitung, wie aus US-A-5 926 080 bekannt. Es ist jeweils ein Ende der Verbindung mittels eines Verbindungsgliedes, z.B. einer Steckverbindung, mit dem Mikrowellengenerator und ein weiteres Ende ebenfalls mittels eines Verbindungsgliedes mit dem Sende- oder Sende- und Empfangselement zu verbinden, was zu den zuvor beschriebenen Problemen führt.

Es ist eine Aufgabe der Erfindung ein mit Mikrowellen arbeitendes Füllstandsmeßgerät mit einer Antenne zum Senden oder zum Senden und Empfangen von Mikrowellen anzugeben, das eine geringe Blockdistanz aufweist.

Hierzu besteht die Erfindung in einem mit Mikrowellen arbeitenden Füllstandsmeßgerät mit den Merkmalen des Anspruchs 1.

Gemäß einer Weiterbildung weist das Füllstandsmeßgerät eine Platine auf, auf der sich der Mikrowellengenerator befindet, und die einen in die Antenne hineinragenden Abschnitt aufweist, auf dem das Sende- oder Sende- und Empfangselement angeordnet ist.

Gemäß einer Weiterbildung dient mindestens eine Mikrostreifenleitung als Sende- oder Sende- und Empfangselement.

Gemäß einer Ausgestaltung umfaßt die Antenne einen einseitig endseitig mittels einer Rückwand kurzgeschlossenen zylindrischen Hohlleiter und der Abschnitt der Platine ist seitlich in den Hohlleiter eingeführt und von der Rückwand beabstandet.

Gemäß einer weiteren Ausgestaltung der vorgenannten Ausgestaltung umfaßt das Sende- oder Sende- und Empfangselement eine gerade Mikrostreifenleitung, die auf einer in Senderichtung weisenden Fläche des Abschnitt der Platine verläuft und im Inneren des Hohlleiters endet.

Gemäß einer Weiterbildung der letztgenannten Ausgestaltung ist auf die Mikrostreifenleitung endseitig im Inneren des Hohlleiters ein in Senderichtung weisender elektrisch leitfähiger Körper aufgebracht.

Gemäß einer anderen Ausgestaltung der letztgenannten Ausgestaltung ist das Sende- oder Sende- und Empfangselement eine gerade Mikrostreifenleitung, die auf einer senkrecht zur Senderichtung weisenden Fläche des Abschnitts der Platine verläuft und im Inneren des Hohlleiters endet.

Gemäß einer anderen Ausgestaltung der zuerst genannten Ausgestaltung umfaßt das Sende- oder Sende- und Empfangselement zwei gerade Mikrostreifenleitungen, die senkrecht zueinander auf in Senderichtung weisenden Flächen der Platine verlaufen und im Inneren des Hohlleiters (39) enden.

Gemäß einer anderen Ausgestaltung umfaßt die Antenne einen einseitig endseitig kurzgeschlossenen zylindrischen Hohlleiter und der Abschnitt der Platine ist parallel zu einer Längsachse des Hohleiters in die Antenne hinein geführt.

Gemäß einer Weiterbildung der zweiten Ausgestaltung umfaßt das Sende- oder Sende- und Empfangselement eine erste auf einer ersten Oberfläche des Abschnitts und eine zweite auf einer zweiten Oberfläche des Abschnitts verlaufende Mikrostreifenleitung.

Gemäß einer Ausgestaltung der letztgenannten Weiterbildung weisen die erste und die zweite Mikrostreifenleitung jeweils ein gerades Segment auf, dessen erstes Ende mit dem Mikrowellengenerator verbunden ist und an dessen zweites Ende sich ein gekrümmtes Segment anschließt.

Gemäß einer anderen Ausgestaltung ist die Verbindung eine Mikrostreifenleitung und das Sende- oder Sende- und Empfangselement ist ein auf der Mikrostreifenleitung aufgebrachter, sich in die Antenne hinein erstreckender Metallstift.

Gemäß einer Weiterbildung der Erfindung weist die Antenne eine Wärmeentkopplung auf.

Ein Vorteil der Erfindung besteht darin, daß bei dem erfindungsgemäßen Füllstandmeßgerät Mikrowellen im Betrieb vom Mikrowellengenerator unmittelbar auf das Sende- oder Sende- und Empfangselement geleitet sind. Das Sende- oder Sende- und Empfangselement ist kein separates Bauteil sondern eine Fortsetzung der Verbindung. Hierdurch werden Impedanzsprünge, die zu Reflektionen oder sogar Mehrfachreflektionen führen könnten deutlich reduziert. Außerdem befindet sich der Mikrowellengenerator in unmittelbarer Nähe des Sende- oder Sende- und Empfangselements. Die Laufzeit eines reflektierten oder sogar eines mehrfach reflektierten Mikrowellensignales ist aufgrund des geringen Abstandes minimal. Entsprechend sind solche Störsignale sehr schnell abgeklungen. Die Blockdistanz, sofern sie aufgrund der geringen Amplitude der Störsignale überhaupt existiert endet bei erfindungsgemäßen Füllstandsmeßgeräten im Inneren der Antenne und stellt somit keine Einschränkung des Meßbereichs dar.

Die Erfindung und weitere Vorteile werden nun anhand der Figuren der Zeichnung, in denen fünf Ausführungs-beispiele dargestellt sind, näher erläutert; gleiche Teile sind in den Figuren mit gleichen Bezugszeichen versehen.
- Fig. 1: zeigt eine schematische Darstellung eines herkömmlichen Füllstandsmeßgeräts;
- Fig. 2: zeigt eine schematische Darstellung eines erfindungsgemäßen Füllstandsmeßgeräts, bei dem das Sende- oder Sende- und Empfangselement zwei in Senderichtung weisende Mikrostreifenleitungen umfaßt;
- Fig. 3: zeigt eine Draufsicht auf die Antenne von Fig. 1;
- Fig. 4: zeigt eine schematische Darstellung eines erfindungsgemäßen Füllstandsmeßgeräts, bei dem das Sende- oder Sende- und Empfangselement eine senkrecht zur Senderichtung verlaufende Mikrostreifenleitung aufweist;
- Fig. 5: zeigt eine Draufsicht auf eine in Senderichtung weisende Seite der Platine von Fig. 4;
- Fig. 6: zeigt eine Draufsicht auf eine von der Senderichtung abgewandte Seite der Platine von Fig. 4;
- Fig. 7: zeigt eine schematische Darstellung eines erfindungsgemäßen Füllstandsmeßgeräts, bei dem das Sende- oder Sende- und Empfangselement zwei senkrecht zueinander und senkrecht zur Senderichtung verlaufende Mikrostreifenleitungen aufweist;
- Fig. 8: zeigt eine Draufsicht auf eine in Senderichtung weisende Seite der Platine von Fig. 7;
- Fig. 9: zeigt eine schematische Darstellung eines erfindungsgemäßen Füllstandsmeßgeräts, bei dem das Sende- oder Sende- und Empfangselement eine senkrecht zur Senderichtung verlaufende Mikrostreifenleitung aufweist, deren Oberfläche senkrecht zur Senderichtung orientiert ist; und
- Fig. 10: zeigt einen Schnitt durch eine schematische Darstellung eines erfindungsgemäßen Füllstandsmeßgeräts, bei dem das Sende- oder Sende- und Empfangselement ein mit einer Mikrostreifenleitung verbundener Metallstift ist; und
- Fig. 11: zeigt eine Ansicht des in Fig. 10 dargestellten Füllstandsmeßgeräts.

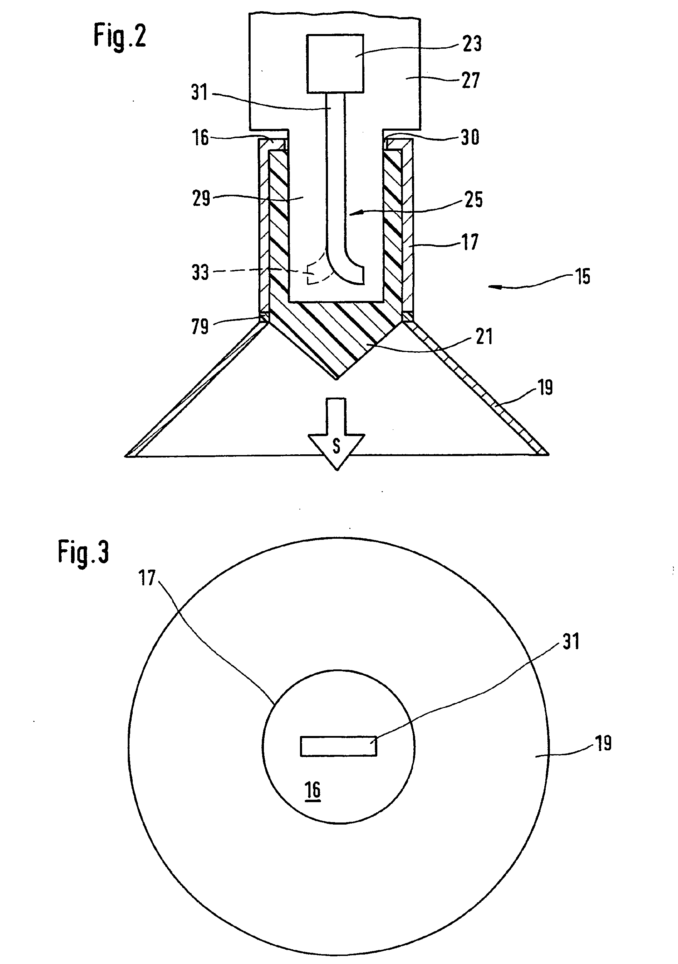

In Fig. 2 ist eine schematische Darstellung eines ersten Ausführungsbeispiele eines erfindungsgemäßen Füllstandsmeßgeräts dargestellt.

Es umfaßt eine Antenne 15 zum Senden oder zum Senden und Empfangen von Mikrowellen. In dem gezeigten Ausführungsbeispiel ist die Antenne 15 eine Hornantenne und weist einen einseitig endseitig durch eine Rückwand 16 kurzgeschlossenen zylindrischen Hohlleiter 17 und ein sich daran in Senderichtung anschließendes trichterförmiges Horn 19 auf. Die Senderichtung ist in Fig. 2 durch einen Pfeil S symbolisiert. Ein Durchmesser des Horns 19 nimmt in Senderichtung zu. Der Hohlleiter 17 und das Horn 19 bestehen aus einem elektrisch leitfähigen Material, z.B. einem Edelstahl. Im Inneren des Hohlleiters 17 ist ein Einsatz 21 aus einem Dielektrikum, z.B. aus Polytetraflourethylen (PTFE), angeordnet, der im wesentlichen zylindrisch ist und den Hohlleiter 17 ausfüllt. Der Einsatz 21 weist eine konische in das Horn 19 hineinragende Spitze auf.

Der Einsatz 21 dient hauptsächlich zum Schutz vor chemischen und/oder mechanischen Einwirkungen. In einer Meßumgebung, in der ein solcher Schutz nicht erforderlich ist, kann das Füllstandsmeßgerät auch ohne Einsatz 21 eingesetzt werden.

Unmittelbar an der Antenne 15 ist ein Mikrowellengenerator 23 zur Erzeugung von Mikrowellen angeordnet. Der Mikrowellengenerator 23 ist beispielsweise ein in planarer Schaltungstechnik aufgebautes Pulsradar-Gerät, ein in planarer Schaltungstechnik aufgebautes FMCW-Gerät oder ein in planarer Schaltungstechnik aufgebauter kontinuierlich schwingender Mikrowellen-Oszillator. Der Mikrowellengenerator 23 ist erfindungsgemäß direkt mit einem in die Antenne 15 hineinweisenden Sende- oder Sende- und Empfangselement 25 verbunden.

In dem gezeigten Ausführungsbeispiel weist das Füllstandsmeßgerät eine Platine 27 auf, auf der sich der Mikrowellengenerator 23 befindet. Auf der Platine 27 können weitere, in Fig. 2 nicht dargestellte, elektronische Schaltungselemente, die zur Aufnahme, Umwandlung und Verarbeitung von Mikrowellensignale geeignet sind, z.B. Filter, Richtkoppler, Mischer und dergleichen, angeordnet sein. Diese Bauteile sind ebenfalls in planarer Schaltungstechnik realisierbar. Dient die Antenne 15 zum Senden und zum Empfangen, so ist beispielsweise ein Richtkoppler vorzusehen, über den Mikrowellen vom Mikrowellengenerator 23 zum Sende- und Empfangselement 25 gelangen und vom Sende- und Empfangselement 25 empfangene Mikrowellen zu einer die Echossignale weiterverarbeitenden Einheit gelangen.

Die Platine 27 weist einen Abschnitt 29 auf, der durch einen in der Rückwand 16 des Hohleiters 17 diagonal verlaufenden Spalt 30 parallel zu einer Längsachse des Hohleiters 17 in die Antenne 15 hinein geführt ist. Fig. 3 zeigt eine Draufsicht auf die Antenne 15 in der der Spalt 31 und dessen Form ersichtlich sind.

Das Sende- oder Sende- und Empfangselement 25 befindet sich auf dem Abschnitt 29 und ist auf der gleichen Platine 27 angeordnet, wie der Mikrowellengenerator 23. Der Mikrowellengenerator 23 und das Sende- oder Sende- und Empfangselement 25 sind mittels einer Verbindung unmittelbar miteinander verbunden. Der Abstand zwischen Sende- oder Sende- und Empfangselement 25 und Mikrowellengenerator 23 ist somit minimal.

Erfindungsgemäß ist das Sende- oder Sende- und Empfangselement 25 eine Verlängerung der Verbindung zwischen Mikrowellengenerator 23 und Sende- oder Sende- und Empfangselement 25. Als Verbindung und als Sende- oder Sende- und Empfangselement 25 dient bei dem in Fig. 2 dargestellten Ausführungsbeispiel mindestens eine Mikrostreifenleitung. Eine Mikrostreifenleitung ist, wie der Name schon sagt, geeignet Mikrowellen zu leiten. Der Mikrowellengenerator 23 ist somit direkt, insb. ohne Zwischenfügung einer Zuleitung, mit der Mikrostreifenleitung und damit mit dem durch diese gebildeten Sende- oder Sende- und Empfangselement 25 verbunden.

In dem in Fig. 2 dargestellten Ausführungsbeispiel umfaßt das Sende- oder Sende- und Empfangselement 25 eine auf einer ersten Oberfläche des Abschnitts 29 verlaufende erste Mikrostreifenleitung 31 und eine auf einer zweiten Oberfläche des Abschnitts 29 verlaufende zweite Mikrostreifenleitung 33. In Fig. 2 ist eine Schnittebene gezeigt in der die erste Mikrostreifenleitung 31 liegt. Die zweite Mikrostreifenleitung 33 liegt in einer anderen Schnittebene und ist daher nur in Form einer gestrichelten Linie dargestellt.

Die beiden Mikrostreifenleitungen 31, 33 sind formgleich und weisen ein gerades Segment auf. Ein erstes Ende des geraden Segments ist mit dem Mikrowellengenerator 23 verbunden und an ein zweites Ende des geraden Segments schließt ein gekrümmtes Segment an.

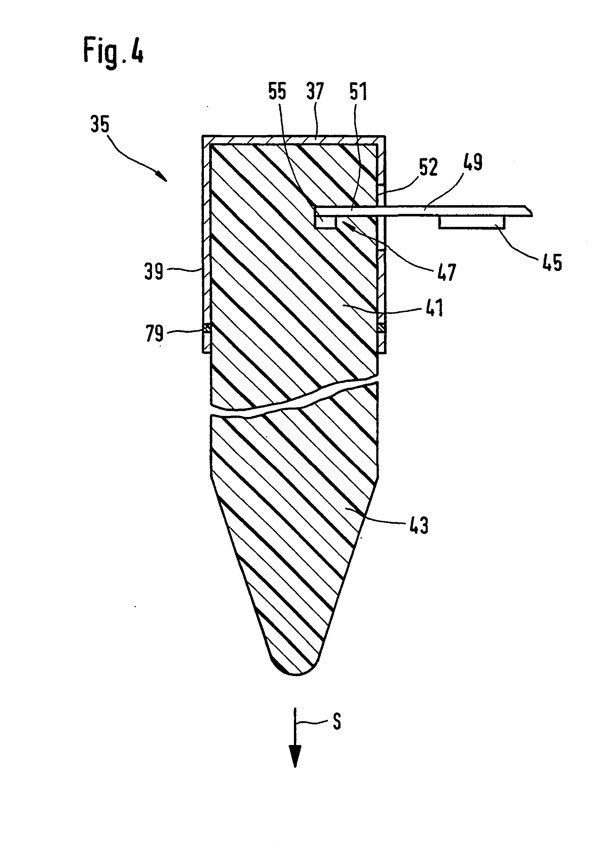

Fig. 4 zeigt eine schematische Darstellung eines weiteren Ausführungsbeispiels eines erfindungsgemäßen Füllstandsmeßgeräts. Es weist eine Antenne 35, hier eine Stabantenne, zum Senden oder zum Senden und Empfangen von Mikrowellen auf. Die Antenne 35 umfaßt einen zylindrischen mittels einer Rückwand 37 einseitig endseitig kurzgeschlossenen Hohlleiter 39 in dem ein Einsatz 41 aus einem Dielektrikum, z.B. aus Polytetraflourethylen (PTFE), angeordnet ist. An den Einsatz 41 ist ein in eine durch eine Pfeil S dargestellte Senderichtung weisender dielektrischer Stab 43 angeformt, dessen Durchmesser endseitg in Senderichtung abnimmt. Auch hier gilt, daß das Füllstandsmeßgerät prinzipiell auch ohne Einsatz 41 verwendbar ist, sofern die Meßumgebung dies erlaubt.

Unmittelbar an der Antenne 35 ist ein Mikrowellengenerator 45 zur Erzeugung von Mikrowellen angeordnet. Der Mikrowellengenerator 45 ist in planarer Schaltungstechnik aufgebaut und direkt mit einem in die Antenne 35 hineinweisenden Sende- oder Sende- und Empfangselement 47 verbunden. Erfindungsgemäß ist das Sende- oder Sende- und Empfangselement 47 eine Verlängerung der Verbindung zwischen Mikrowellengenerator 45 und Sende- oder Sende- und Empfangselement 47.

Das Füllstandsmeßgerät weist eine Platine 49 auf, auf der sich der Mikrowellengenerator 45 befindet. Die Platine 49 weist einen Abschnitt 51 auf, der durch eine Ausnehmung 52 in dem Hohlleiter 39 seitlich in die Antenne 35 eingeführt ist. Der Abschnitt 51 ist parallel zu der Rückwand 37 und von dieser beabstandet angeordnet und auf dem Abschnitt 51 ist das in die Antenne 35 hineinragenden Abschnitt 51 ist das Sende- oder Sende- und Empfangselement 47 angeordnet.

Als Verbindung und als Sende- oder Sende- und Empfangselement 47 dient bei dem in Fig. 4 dargestellten Ausführungsbeispiel mindestens eine auf dem Abschnitt 51 angeordnete Mikrostreifenleitung. Eine Mikrowellen abstrahlende Oberfläche der Mikrostreifenleitung weist in dem dargestellten Ausführungsbeispiel in Senderichtung. Andere Orientierungen der abstrahlenden Oberfläche, z.B. in Richtung der Rückwand 37, sind prinzipiell auch möglich.

Der Mikrowellengenerator 45 ist direkt, insb. ohne Zwischenfügung einer an deren beiden Enden anzuschließenden Zuleitung, mit der Mikrostreifenleitung und damit mit dem durch diese gebildeten Sende- oder Sende- und Empfangselement 47 verbunden.

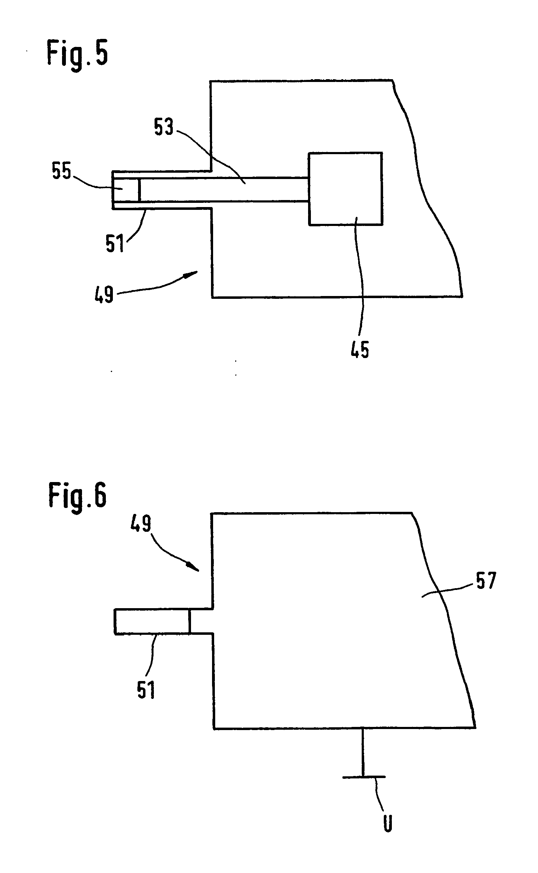

Fig. 5 zeigt eine Draufsicht auf eine in Senderichtung weisende Seite der Platine 49 von Fig. 4 und Fig. 6 zeigt eine Draufsicht auf eine von der Senderichtung abgewandten Seite der Platine 49 von Fig. 4.

Wie aus Fig. 4 und Fig. 5. ersichtlich umfaßt das Sende- oder Sende- und Empfangselement 47 in dem gezeigten Ausführungsbeispiel eine Mikrostreifenleitung 53, die gerade ist. Sie verläuft auf einer in Senderichtung weisenden Fläche des Abschnitt 53 der Platine und endet im Inneren des Hohlleiters 39.

Zur Verbesserung der Sendeeigenschaften ist auf die Mikrostreifenleitung 53 endseitig im Inneren des Hohlleiters 39 ein in Senderichtung weisender elektrisch leitfähiger Körper 55 aufgebracht.

Platinen mit Mikrostreifenleitungen weisen üblicherweise auf deren der die Leitungsstruktur aufweisenden Oberfläche gegenüberliegenden Oberfläche eine elektrisch leitfähige Beschichtung auf, die mit Masse oder einem anderen Bezugpotential verbunden ist. Wie in Fig. 6 dargestellt, weist die Platine 49 ebenfalls eine mit einem Bezugspotential U verbundene Beschichtung 57 auf. Simulationsrechnungen und Versuche haben jedoch gezeigt, daß sich die Sendeleistung verbessert, wenn zumindest der in dem Hohleiter 39 befindliche Abschnitt 51 beschichtungsfrei ist.

Bei beiden Ausführungsbeispielen ist die Geometrie der Sende- oder Sende- und Empfangselemente 25, 47 zur Füllstandsmessung vorzugsweise für eine Anregung des in Rundhohlleitern ausbreitungsfähigen transversalelektrischen 11 Modes (TE-11) ausgelegt. Dieser Mode weist eine Abstrahlcharakteristik mit einer ausgeprägten Vorwärtskeule auf und ist daher zum gerichteten Senden von Mikrowellen besonders geeignet. Durch Simulationsrechnungen können dann die Abmessungen von Hohlleiter und Mikrostreifenleitungen für eine gewünschte Frequenz optimiert werden. Bei Mikrowellensignalen, die ein Frequenzspektrum mit einer Bandbreite aufweisen kann eine Mittenfrequenz oder eine Frequenz, die ein wesentlicher Anteil der zu sendenden Mikrowellenleistung aufweist, bei der Optimierung zugrunde gelegt werden.

Die Erfindung ist jedoch weder auf Rundhohlleiter noch auf den TE-11 Mode beschränkt sondern kann analog auch bei anderen Hohlleiterquerschnitten, z.B. Rechteckhohlleitern, und anderen Ausbreitungsmoden eingesetzt werden.

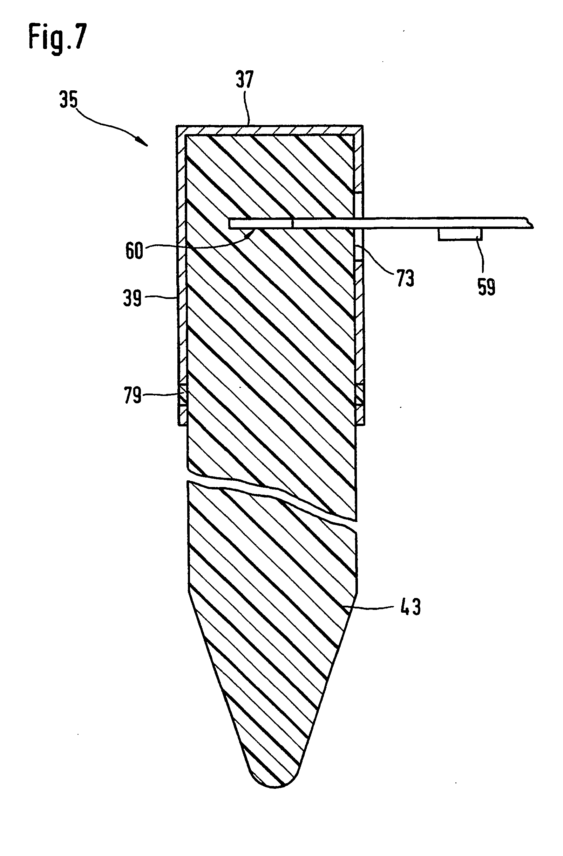

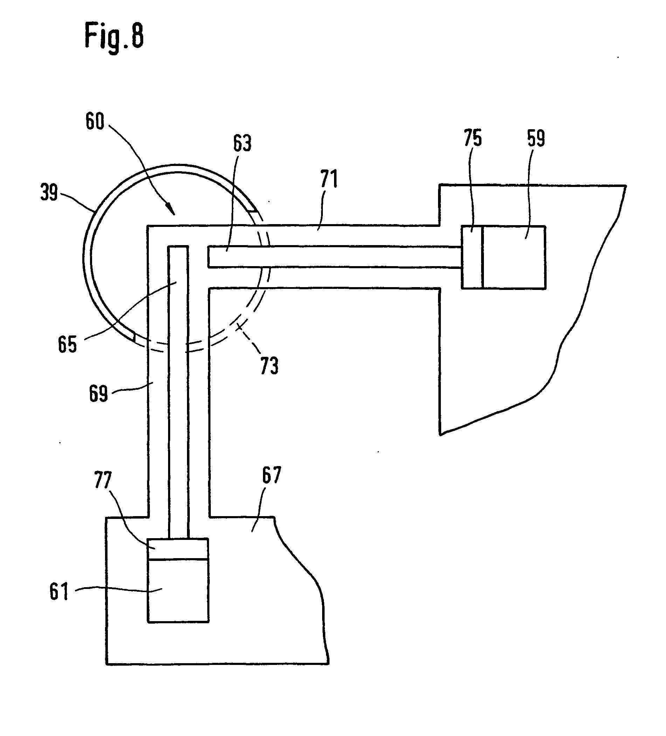

Fig. 7 zeigt eine schematische Darstellung eines weiteren Ausführungsbeispiels eines erfindungsgemäßen Füllstandsmeßgeräts. Es weist eine Antenne 35 zum Senden oder zum Senden und Empfangen von Mikrowellen auf, die der in dem in Fig. 4 dargestellten Ausführungsbeispiel entspricht. Sie ist nachfolgend daher nicht näher beschrieben. Unmittelbar an der Antenne 35 sind ein erster Mikrowellengenerator 59 und ein in Fig. 8 dargestellter zweiter Mikrowellengenerator 61 angeordnet.

Es ist ein in die Antenne 35 hinein weisendes Sende- oder Sende- und Empfangselement 60 vorgesehen. Als Sende- oder Sende- und Empfangselement 60 dienen hier zwei Mikrostreifenleitungen 63, 65. Die Mikrostreifenleitung 63 ist mittels einer Verbindung unmittelbar mit dem Mikrowellengenerator 59, und die Mikrostreifenleitung 65 ist mittels einer Verbindung unmittelbar mit dem Mikrowellengenerator 61 verbunden. Die Verbindung ist in beiden Fällen eine Fortsetzung der Mikrostreifenleitungen 63, 65. Das Sende- oder Sende- und Empfangselemente 60 ist somit eine Verlängerung der Verbindung zu den jeweiligen Mikrowellengenerator 59, 61.

Das Füllstandsmeßgerät weist eine Platine 67 auf, auf der sich die Mikrowellengeneratoren 59, 61 befinden. Die Platine 67 weist zwei rechteckige in die Antenne 35 hinein ragende Abschnitte 69, 71 auf, die im Inneren der Antenne 35 rechtwinklig aneinander angrenzen. Die beiden Abschnitte 69, 71 der Platine 67 sind seitlich durch eine Öffnung 73 von der Rückwand 37 beabstandet in den Hohlleiter 39 eingeführt. Zum besseren Verständnis ist eine Querschnittsebene des Hohlleiters 39 in der sich die Platine 67 befindet in Fig. 8 eingezeichnet. In dem dargestellten Ausführungsbeispiel ist ein Rundhohlleiter vorgesehen. Andere Hohlleiterquerschnitte, z.B. Rechteckhohlleiter, sind ebenfalls einsetzbar. Auf den Abschnitten 69, 71 der Platine 67 ist das Sende- oder Sende- und Empfangselement 60 angeordnet.

Die beiden Mikrostreifenleitungen 63, 65 sind gerade und verlaufen senkrecht zueinander auf in Senderichtung weisenden Flächen der Abschnitte 69, 71 der Platine 67. Sie enden im Inneren des Hohlleiters 39.

Auf der Platine 67 können weitere, in Fig. 8 nicht dargestellte, elektronische Schaltungselemente, die zur Aufnahme, Umwandlung und Verarbeitung von Mikrowellensignale geeignet sind, z.B. Filter, Richtkoppler, Mischer und dergleichen, angeordnet sein. Diese Bauteile sind ebenfalls in planarer Schaltungstechnik realisierbar. Dient die Antenne 35 zum Senden und zum Empfangen, so sind beispielsweise ein Richtkoppler vorzusehen, über die Mikrowellen von den Mikrowellengeneratoren 59, 61 zum Sende- oder Sende- und Empfangselement 60 gelangen und vom Sende- oder Sende- und Empfangselement 60 empfangene Mikrowellen zu einer die Echossignale weiterverarbeitenden Einheit gelangen.

Ein in den Figuren 7 und 8 dargestelltes Sende- oder Sende- und Empfangselement 60 kann z.B. dazu verwendet werden linear polarisierte Mikrowellen zu senden oder zu senden und zu empfangen. Dabei werden von den Mikrowellengeneratoren 59, 61 erzeugte Mikrowellen jeweils durch einen, ebenfalls in planarer Schaltungstechnik realisierbaren, Polarisationsfilter 75, 77 geführt, an dessen Ausgang linear polarisierte Mikrowellen zur Verfügung stehen, deren Polarisationsrichtung parallel zur Längsachse der jeweiligen Mikrostreifenleitung 63, 65 verläuft. Aufgrund der rechtwinkligen Anordnung der beiden Mikrostreifenleitungen 63, 65 zueinander weisen die von der Mikrostreifenleitung 63 gesendeten Mikrowellen eine Polarisation auf, die um 90° gegenüber der Polarisation der von der Mikrostreifenleitung 65 gesendeten Mikrowellen gedreht ist.

Aufgrund der um 90° gegeneinder gedrehten Polarisationen können von den Mikrostreifenleitungen 63 und 65 gesendete und an einer Füllgutoberfläche reflektierte Mikrowellen sauber voneinander getrennt empfangen und ausgewertet werden. Ein Herausfiltern von Mikrowellen mit einer zuvor gesendeten Polarisationsrichtung bietet den Vorteil, daß Stör- und/oder Streureflexionen, die üblicherweise eine von der gesendeten Polarisationsrichtung verschiedene Polarisationsrichtung aufweisen eliminiert werden. Die Verwendung von zwei zueinander senkrecht stehenden Polarisationsrichtungen bietet eine erhöhte Meßsicherheit, da zwei unabhängige Meßsignale gewonnen und ausgewertet werden. So kann z.B. auch dann noch eine zuverlässige Messung erfolgen, wenn eine der Polarisationsrichtungen parallel zu einer diagonal durch den Behälter verlaufenden Strebe oder einem anderen Mikrowellen reflektierenden Element, z.B. einem Rührwerk, verläuft.

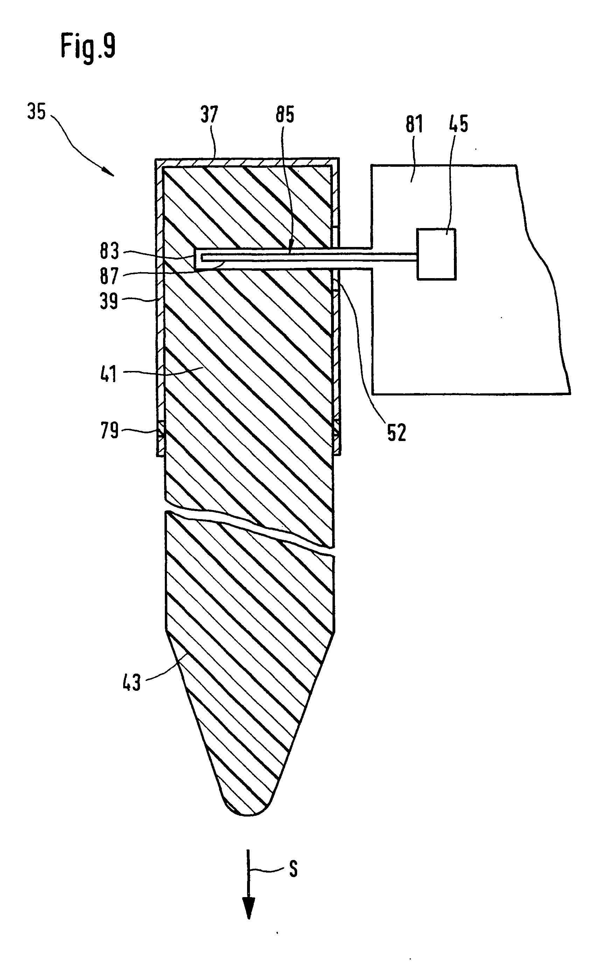

Fig. 9 zeigt eine schematische Darstellung eines weiteren Ausführungsbeispiels eines erfindungsgemäßen Füllstandsmeßgeräts. Es entspricht im wesentlichen dem in Fig. 4 dargestellten Ausführungsbeispiel. Es werden daher nachfolgend lediglich die Unterschiede näher beschrieben.

Das Füllstandsmeßgerät weist eine Platine 81 auf, auf der sich der Mikrowellengenerator 45 befindet. Die Platine 81 weist einen Abschnitt 83 auf, der durch eine Ausnehmung 523 in dem Hohlleiter 39 seitlich in die Antenne 35 eingeführt ist. Der Abschnitt 83 verläuft senkrecht zur Senderichtung S und endet im Inneren des Hohlleiters 39. Er ist senkrecht zu der Rückwand 37 und von dieser beabstandet angeordnet und auf dem in die Antenne 35 hineinragenden Abschnitt 83 ist ein Sende- oder Sende- und Empfangselement 85 angeordnet.

Als Verbindung und als Sende- oder Sende- und Empfangselement 85 dient bei dem in Fig. 9 dargestellten Ausführungsbeispiel mindestens eine auf dem Abschnitt 83 angeordnete Mikrostreifenleitung 87. Eine Mikrowellen abstrahlende Oberfläche der Mikrostreifenleitung 87 weist senkrecht zur Senderichtung. Der Mikrowellengenerator 45 ist direkt, insb. ohne Zwischenfügung einer an deren beiden Enden anzuschließenden Zuleitung, mit der Mikrostreifenleitung und damit mit dem durch diese gebildeten Sende- oder Sende- und Empfangselement 85 verbunden.

Für den Fall, daß ein erfindungsgemäßes Füllstandsmeßgerät an einem Meßort eingesetzt werden soll, an dem höhere Temperaturen auftreten, weist die Antenne 15, 35 zum Schutz des Mikrowellengenerators 23, 45 vorzugsweise eine Wärmeentkopplung 79 auf. Dies kann z.B. ein Abschnitt des Hohlleiter 17, 39 sein, in dem ein Ring eingearbeitet ist, der aus einem Material besteht, das ein schlechter Wärmeleiter ist. Alternativ kann ein ringförmiger Abschnitt des Hohlleiters 17, 39 hohl und evakuiert sein oder es kann der Hohlleiter 17, 39 aus zwei Zylindern bestehen, die lediglich an einigen wenigen Punkten miteinander verbunden sind. Es ist eine Vielzahl verschiedener Wärmeentkopplungen einsetzbar. Auch Unterbrechungen der leitfähigen inneren Oberfläche des Hohlleiters 17, 39 sind möglich solange die Abmessungen dieser Unterbrechungen klein sind gegenüber der Wellenlänge der Mikrowellen im Hohlleiter 17, 39.

Bei den dargestellten Ausführungsbeispielen ist jeweils die Platine 27, 49, 69, 71, 81 in den Hohleiter 17, 39 der Antenne 15, 35 hinein geführt. Selbstverständlich kann anstelle dieser offenen Bauweise auch in dem Bereich, in dem die Platine 27, 49, 69, 71, 81 die Hohlleiterwand 16, 52, 73 durchdringt rings um die Platine 27, 49, 60, 71, 81 eine Abdichtung vorgesehen sein. So kann z.B. in die entsprechenden Öffnungen eine Durchführung, z.B. eine Glasdurchführung oder eine mit einem Kunststoff, wie z. B. Polytetraflourethylen (PTFE), gefüllte Durchführung vorgesehen sein. Alternativ können die Platinen 27, 49, 69, 71, 81 jeweils im Bereich der Hohlleiterwand 16, 53, 73 eine Unterbrechung aufweisen, und es kann eine herkömmliche handelsübliche Durchführung mit endseitig heraus geführten Leitungsenden an dieser Stelle in die Hohlleiterwand 16, 53, 73 eingesetzt sein. Die Leitungsenden sind in diesem Fall direkt mit den Mikrostreifenleitungen 31, 33, 63, 65, 53, 87 zu verbinden.

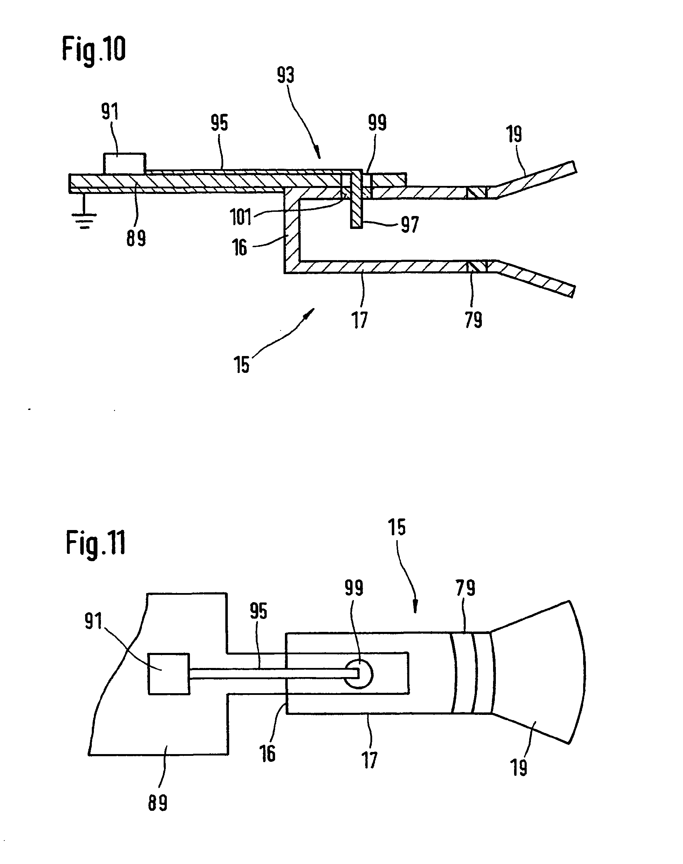

Fig. 10 zeigt einen Schnitt durch weiteres Ausführungsbeispiel eines mit Mikrowellen arbeitendes Füllstandsmeßgerät. Fig. 11 zeigt eine Ansicht desselben. Das Füllstandsmeßgerät weist eine Antenne 15 auf, die im wesentlichen der in Fig. 2 dargestellten Hornantenne entspricht. Sie dient zum Senden oder zum Senden und Empfangen von Mikrowellen und weist einen endseitig durch eine Rückwand 16 kurzgeschlossenen zylindrischen Hohlleiter 17 und ein daran in Senderichtung anschließendes trichterförmiges Horn 19 auf. Die Erfindung ist jedoch nicht auf Rundhohlleiter beschränkt. Andere Hohlleitergeometrien sind ebenfalls einsetzbar.

Außen an dem Hohlleiter 17 ist eine Platine 89 angebracht, auf der unmittelbar an der Antenne 15 ein Mikrowellengenerator 91 angeordnet ist. Der Mikrowellengenerator 91 ist, genau wie bei den zuvor beschriebenen Ausführungsbeispielen, z.B. ein in planarer Schaltungstechnik aufgebautes Pulsradar-Gerät, ein in planarer Schaltungstechnik aufgebautes FMCW-Gerät oder ein in planarer Schaltungstechnik aufgebauter kontinuierlich schwingender Mikrowellen-Oszillator.

Das Füllstandsmeßgerät weist ein in die Antenne 15 hinein weisendes mittels einer Verbindung unmittelbar mit dem Mikrowellengenerator 91 verbundenes Sende- oder Sende- und Empfangselement 93 auf.

In dem in den Figuren 10 und 11 dargestellten Ausführungsbeispiel ist die Verbindung eine Mikrostreifenleitung 95, die auf einer antennen-abgewandten Seite der Platine 89 verläuft. Als Sende- oder Sende- und Empfangselement 93 dient ein Metallstift 97. Der Metallstift 97 führt durch die Platine 89 und den Hohlleiter 17 hindurch und erstreckt sich in die Antenne 15 hinein.

Der Metallstift 97 ist auf einer der Antenne 15 zugewandten Seite der Mikrostreifenleitung 95 aufgebracht. In diesem Bereich weist die Platine 89 eine Ausnehmung 99 auf, durch die die antennen-zugewandte Seite der Mikrostreifenleitung 95 zugänglich ist. Unter der Ausnehmung 99 befindet sich eine Öffnung in der Wand des Hohlleiters 17, durch die der Metallstift 97 in die Antenne 15 hinein führt.

Der Metallstift 97 stellt eine Verlängerung der Mikrostreifenleitung 95 dar. Das Sende- oder Sende- und Empfangselement 93 ist also eine Verlängerung der Verbindung zum Mikrowellengenerator.

In der Öffnung im Hohlleiter 17 ist eine Durchführung 101 vorgesehen, die einen zwischen dem Metallstift 97 und dem Hohleiter 17 bestehenden ringzylindrischen Spalt ausfüllt. Die Durchführung dient zur Abdichtung und kann z.B. auch Glas oder aus einem Kunststoff, z.B. aus Poyltetraflourethylen (PTFE), bestehen.

Wie auch bei den zuvor beschriebenen Ausführungsbeispielen ist auch hier eine Wärmeentkopplung 79 vorgesehen.

## Patentansprüche

1. Mit Mikrowellen arbeitendes Füllstandsmeßgerät mit
- einer Antenne (15, 35) zum Senden oder zum Senden und Empfangen von Mikrowellen,
- einer Platine (27, 49, 67, 81),
- - auf der sich ein unmittelbar an der Antenne (15, 35) angeordneten Mikrowellengenerator (23, 45, 59, 61, 91) befindet, und
- - die einen in die Antenne (15, 35) hineinragenden Abschnitt (29, 51, 69, 71, 83) aufweist,
- - auf dem ein mittels einer Verbindung unmittelbar mit dem Mikrowellengenerator (23, 45, 59, 61, 91) verbundenes Sende- oder Sende- und Empfangselement (25, 47, 60, 85, 93) aus mindestens einer Mikrostreifenleitung (31, 33, 53, 63, 65, 87) angeordnet ist, das eine Verlängerung der Verbindung ist.

2. Mit Mikrowellen arbeitendes Füllstandsmeßgerät nach Anspruch 1, bei dem die Antenne (35) einen einseitig endseitig mittels einer Rückwand (37) kurzgeschlossenen zylindrischen Hohlleiter (39) umfaßt und der Abschnitt (51, 69, 71, 83) der Platine (49, 67, 81) seitlich in den Hohlleiter (39) eingeführt ist und von der Rückwand (37) beabstandet ist.

3. Mit Mikrowellen arbeitendes Füllstandsmeßgerät nach Anspruch 2, bei der das Sende- oder Sende- und Empfangselement (47) eine gerade Mikrostreifenleitung (53) umfaßt, die auf einer in Senderichtung weisenden Fläche des Abschnitts (51) der Platine (49) verläuft und im Inneren des Hohlleiters (39) endet.

4. Mit Mikrowellen arbeitendes Füllstandsmeßgerät nach Anspruch 3, bei dem auf die Mikrostreifenleitung (53) endseitig im Inneren des Hohlleiters (39) ein in Senderichtung weisender elektrisch leitfähiger Körper (55) aufgebracht ist.

5. Mit Mikrowellen arbeitendes Füllstandsmeßgerät nach Anspruch 2, bei der das Sende- oder Sende- und Empfangselement (85) eine gerade Mikrostreifenleitung (87) umfaßt, die auf einer senkrecht zur Senderichtung weisenden Fläche des Abschnitts (83) der Platine (81) verläuft und im Inneren des Hohlleiters (39) endet.

6. Mit Mikrowellen arbeitendes Füllstandsmeßgerät nach Anspruch 2, bei der das Sende- oder Sende- und Empfangselement (60) zwei gerade Mikrostreifenleitungen (63, 65) umfaßt, die senkrecht zueinander auf in Senderichtung weisenden Flächen der Platine (67) verlaufen und im Inneren des Hohlleiters (39) enden.

7. Mit Mikrowellen arbeitendes Füllstandsmeßgerät nach Anspruch 1, bei dem die Antenne (15) einen einseitig endseitig kurzgeschlossenen zylindrischen Hohlleiter (17) umfaßt und der Abschnitt (29) der Platine (27) parallel zu einer Längsachse des Hohleiters (17) in die Antenne (15) hinein geführt ist.

8. Mit Mikrowellen arbeitendes Füllstandsmeßgerät nach Anspruch 7, bei dem das Sende- oder Sende- und Empfangselement (25) eine erste auf einer ersten Oberfläche des Abschnitts (29) und eine zweite auf einer zweiten Oberfläche des Abschnitts (29) verlaufende Mikrostreifenleitung (31, 33) umfaßt.

9. Mit Mikrowellen arbeitendes Füllstandsmeßgerät nach Anspruch 8, bei dem die erste und die zweite Mikrostreifenleitung (31, 33) jeweils ein gerades Segment aufweisen, dessen erstes Ende mit dem Mikrowellengenerator (23) verbunden ist und an dessen zweites Ende sich ein gekrümmtes Segment anschließt.

10. Mit Mikrowellen arbeitendes Füllstandsmeßgerät nach Anspruch 1, bei dem die Verbindung eine Mikrostreifenleitung (95) ist und das Sende- oder Sende- und Empfangselement (93) ein auf der Mikrostreifenleitung (95) aufgebrachter, sich in die Antenne (15) hinein erstreckender Metallstift (97) ist.

11. Mit Mikrowellen arbeitendes Füllstandsmeßgerät nach einem der vorangehenden Ansprüche, bei dem die Antenne eine Wärmeentkopplung (79) aufweist.

## Claims

1. A level measuring device that uses microwaves with:
- an antenna (15, 35) to transmit, or to transmit and receive, microwaves
- a board (27, 49, 67, 81)
- - on which a microwave generator (23, 45, 59, 61, 91) is located, said generator being arranged directly on the antenna (15, 35) and
- - which exhibits a section (29, 51, 69, 71, 83) projecting into the antenna (15, 35)
- - on which a transmitter, or a transmitter and receiving element (25, 47, 60, 85, 93), which is directly connected to the microwave generator (23, 45, 59, 61, 91) via a connection and consists of at least one microstrip line (31, 33, 53, 63, 65, 87), is arranged, said element being an extension of the connection.

2. A level measuring device that uses microwaves as per Claim 1, where the antenna (35) comprises a cylindrical waveguide (39), shorted at the end at one side with a rear panel (37), and where the section (51, 69, 71, 83) of the board (49, 67, 81) is introduced from the side into the waveguide (39) and is kept at a distance from the rear panel (37).

3. A level measuring device that uses microwaves as per Claim 2, where the transmitter, or transmitter and receiving element (47), comprises a straight microstrip line (53) which runs along an area of the section (51) of the board (49) pointing in the transmission direction and ends inside the waveguide (39).

4. A level measuring device that uses microwaves as per Claim 3, where an electrically conductive body (55), pointing in the transmission direction, is arranged at the end of the microstrip line (53) inside the waveguide (39).

5. A level measuring device that uses microwaves as per Claim 2, where the transmitter, or transmitter and receiving element (85), comprises a straight microstrip line (87) which runs along an area of the section (83) of the board (81) perpendicular to the transmission direction, and ends inside the waveguide (39).

6. A level measuring device that uses microwaves as per Claim 2, where the transmitter, or transmitter and receiving element (60), comprises two straight microstrip lines (63, 65) that run perpendicular to one another on areas of the board (67) pointing in the transmission direction and end inside the waveguide (39).

7. A level measuring device that uses microwaves as per Claim 1, where the antenna (15) comprises a cylindrical waveguide (17) shorted at the end at one side, and where the section (29) of the board (27) is guided into the antenna (15) parallel to a longitudinal axis of the waveguide (17).

8. A level measuring device that uses microwaves as per Claim 7, where the transmitter, or transmitter and receiving element (25), comprises a first microstrip line (31, 33) running along a first surface of the section (29), and a second microstrip line (31, 33) running along a second surface of the section (29).

9. A level measuring device that uses microwaves as per Claim 8, where the first and second microstrip line (31, 33) each exhibit a straight segment whose first end is connected to the microwave generator (23) and where a curved segment follows at the second end.

10. A level measuring device that uses microwaves as per Claim 1, where the connection is a microstrip line (95) and the transmitter, or transmitter and receiving element (93), is a metal pin (97) fitted on the microstrip line (95) and extending into the antenna (15).

11. A level measuring device that uses microwaves as per one of the previous claims, where the antenna exhibits thermal decoupling (79).

## Revendications

1. Transmetteur de niveau à micro-ondes avec
- une antenne (15, 35) destinée à l'émission ou à l'émission et la réception de micro-ondes,
- une carte de circuit imprimé (27, 49, 67, 81),
- - sur laquelle se trouve un générateur de micro-ondes (23, 45, 59, 61, 91) disposé directement sur l'antenne (15, 35), et
- - qui présente une partie (29, 51, 69, 71, 83) pénétrant dans l'antenne (15, 35)
- - sur laquelle est disposé un élément d'émission ou un élément d'émission et de réception (25, 47, 60, 85, 93) constitué d'au moins une ligne microruban (31, 33, 53, 63, 65, 87), qui représente un prolongement de la liaison, élément qui, au moyen d'une liaison, est relié directement avec le générateur de micro-ondes (23, 45, 59, 61, 91).

2. Transmetteur de niveau à micro-ondes selon la revendication 1, pour lequel l'antenne (35) comprend sur une extrémité un guide d'ondes cylindrique (39) court-circuité au moyen d'une paroi arrière (37) et pour lequel la partie (51, 69, 71, 83) de la carte de circuit imprimé (49, 67, 81) est introduite latéralement dans le guide d'ondes (39), à distance de la paroi arrière (37).

3. Transmetteur de niveau à micro-ondes selon la revendication 2, pour lequel l'élément d'émission ou l'élément d'émission et de réception (47) comprend une ligne microruban droite (53), qui s'étend sur une surface de la partie (51) de la carte de circuit imprimé (49) orientée dans le sens de l'émission, et qui se termine à l'intérieur du guide d'ondes (39).

4. Transmetteur de niveau à micro-ondes selon la revendication 3, pour lequel un corps électroconducteur (55) orienté dans le sens de l'émission est disposé à l'extrémité de la ligne microruban (53), à l'intérieur du guide d'ondes (39).

5. Transmetteur de niveau à micro-ondes selon la revendication 2, pour lequel l'élément d'émission ou l'élément d'émission et de réception (85) comprend une ligne microruban droite (87), qui s'étend sur une surface de la partie (83) de la carte de circuit imprimé (81) orientée perpendiculairement au sens de l'émission, et qui se termine à l'intérieur du guide d'ondes (39).

6. Transmetteur de niveau à micro-ondes selon la revendication 2, pour lequel l'élément d'émission ou l'élément d'émission et de réception (60) comprend deux lignes microrubans droites (63, 65), qui s'étendent sur des surfaces de la carte de circuit imprimé (67), perpendiculaires l'une à l'autre et orientées dans le sens de l'émission, et qui se terminent à l'intérieur du guide d'ondes (39)

7. Transmetteur de niveau à micro-ondes selon la revendication 1, pour lequel l'antenne (15) comprend sur une extrémité un guide d'ondes cylindrique (17) court-circuité, et pour lequel la partie (29) de la carte de circuit imprimé (27) est introduite dans l'antenne (15), parallèlement à un axe longitudinal du guide d'ondes (17).

8. Transmetteur de niveau à micro-ondes selon la revendication 7, pour lequel l'élément d'émission ou l'élément d'émission et de réception (25) comprend une première ligne microruban (31) s'étendant sur une première surface de la partie (29), et une deuxième ligne microruban (33) s'étendant sur une deuxième surface de la partie (29).

9. Transmetteur de niveau à micro-ondes selon la revendication 8, pour lequel la première et la deuxième lignes microrubans (31, 33) présentent chacune un segment droit, dont la première extrémité est reliée avec le générateur de micro-ondes (23) et dont la deuxième extrémité présente un segment de raccordement curviligne.

10. Transmetteur de niveau à micro-ondes selon la revendication 1, pour lequel la liaison est une ligne microruban (95) et l'élément d'émission ou l'élément d'émission et de réception (93) est une tige métallique (97) s'étendant dans l'antenne (15), disposée sur la ligne microruban (95).

11. Transmetteur de niveau à micro-ondes selon l'une des revendications précédentes, pour lequel l'antenne présente un dispositif de découplage de la chaleur (79).
